# EUROPÄISCHE PATENTANMELDUNG

(11) **EP 1 607 258 A1**
(43) Veröffentlichungstag der Anmeldung: **21.12.2005**
(21) Anmeldenummer: 05012749.7
(22) Anmeldetag: 14.06.2005
(51) Int. Cl.: B60J 7/12

(54) **Verdeck für ein Kraftfahrzeug**

(30) Priorität: 17.06.2004 DE 102004029281
(71) Anmelder: DaimlerChrysler AG, 70567 Stuttgart (DE)
(72) Erfinder: Bitzer, Brigitte, 71116 Gärtringen (DE); Marold, Adolf, 71139 Ehningen (DE); Özel, Esref, 71272 Renningen (DE); Scheffer, Johannes, 75382 Althengstett (DE); Dickopf, Marcus, Deceased (DE)

(57) **Zusammenfassung**

Ein Verdeck (1) für ein Kraftfahrzeug (2), welches zwischen einer geschlossenen und einer abgelegten Stellung bewegbar ist, weist einen Verdeckstoff (9), der auf zwei einander gegenüberliegenden Seiten an einem jeweiligen Hebelgestänge (6) angebracht ist, welches jeweils zwei Hauptlenker (7,8) aufweist, die jeweils an einem Ende karosseriefest und an dem gegenüberliegenden Ende mit dem Verdeckstoff (9) verbunden sind, und eine an dem Verdeckstoff (9) angebrachte Heckscheibe (11) auf. Die Heckscheibe (11) ist über jeweilige Lenker (12) mit dem Hebelgestänge (6) verbunden. Die Lenker (12) sind jeweils an einem ihrer Enden über einen ersten Drehpunkt (12a) mit der Heckscheibe (11) und an dem gegenüberliegenden Ende über einen zweiten Drehpunkt (12b) mit einem der beiden Hauptlenker (8) verbunden. Die Heckscheibe (11) ist nur über einen Teil ihrer Höhe mit dem Verdeckstoff (9) verbunden.

## Beschreibung

Die Erfindung betrifft ein Verdeck für ein Kraftfahrzeug, welches zwischen einer geschlossenen und einer abgelegten Stellung bewegbar ist, nach der im Oberbegriff von Anspruch 1 näher definierten Art. Des weiteren betrifft die Erfindung ein Kraftfahrzeug.

Ein gattungsgemäßes Verdeck ist aus der DE 197 31 330 C2 bekannt. Dieses Verdeck weist eine mit dem Verdeckstoff verbundene, flexible Heckscheibe auf, welche vorzugsweise aus PVC besteht und bei der Ablegebewegung des Verdecks gefaltet wird, was ein einfaches Ablegen des Verdecks ermöglicht. Der Nachteil einer solchen flexiblen Heckscheibe besteht darin, dass sie sehr leicht verkratzt und verschmutzt und im Laufe der Zeit milchig wird, was zu einer schlechteren Durchsicht führt.

Es wäre daher wünschenswert, eine Heckscheibe aus einem festen Material einsetzen zu können, was jedoch die Ablegebewegung des Verdecks erheblich erschwert, da eine solche feste Heckscheibe im Gegensatz zu den flexiblen Heckscheiben beim Ablegen nicht gefaltet werden kann.

Dieses bereits seit längerer Zeit bestehende Problem wurde beispielsweise in der DE 38 08 910 C2 oder der DE 38 08 911 A1 angesprochen und es wird dort vorgeschlagen, beim Schlie-βen des Faltverdecks eine Verlagerung der aus Glas bestehenden Heckscheibe mittels einer verhältnismäßig aufwändigen Lösung aus Stützgliedern und Steuerstangen bis zum Anliegen an dem inneren Randbereich der Öffnung zu bewirken. Die dort beschriebene Lösung ist, neben dem Umstand, dass es sich um eine sehr aufwändige Konstruktion handelt, nicht auf das Verdeck gemäß der DE 197 31 330 C2 übertragbar, da es sich um ein vollkommen anderes Verdeck handelt.

Ein weiteres Verdeck mit einer festen Heckscheibe ist in der DE 100 41 487 A1 beschrieben. Hierbei sind zwei gegeneinander verschwenkbare Lenkhebel vorgesehen, welche auf der einen Seite.mit der Karosserie und auf der anderen Seite mit der Heckscheibe verbunden sind. Des weiteren ist einer der Lenkhebel über ein Seil mit dem Hauptlenker eines Verdeckgestänges verbunden.

Nachteilig bei dieser Lösung ist vor allem die Verwendung des Seils, welches Kräfte lediglich in einer Richtung übertragen kann, weshalb ein zusätzlicher Aufwand erforderlich ist, um die Heckscheibe in der Geschlossenstellung des Verdecks gegen den Verdeckstoff zu pressen.

Ein weiteres, sowohl die DE 38 08 910 C2, die DE 38 08 911 A1 als auch die DE 100 41 487 A1 betreffendes Problem besteht darin, dass ausgehend von dem Verdeckgestänge eine sehr große Länge überbrückt werden muss, da das Verdeck in einen Kofferraum des Kraftfahrzeugs abgelegt wird, was bei der DE 197 31 330 C2 nicht der Fall ist. Des weiteren ist es bei dem Verdeck gemäß der DE 100 41 487 A1 notwendig, die Heckscheibe zu Beginn der Ablegebewegung relativ schnell in ihre untere Position zu bringen, um die Ablegebewegung des Verdeckstoffs nicht zu behindern.

Es ist daher Aufgabe der vorliegenden Erfindung, ein gattungsgemäßes Verdeck für ein Kraftfahrzeug derart weiterzubilden, dass mit möglichst geringem konstruktivem Aufwand eine aus einem festen bzw. starren Material bestehende Heckscheibe verwendbar ist.

Erfindungsgemäß wird diese Aufgabe durch die in Anspruch 1 genannten Merkmale gelöst.

Durch die erfindungsgemäße Anbindung der Heckscheibe über die beiden Lenker mit den jeweiligen Hebelgestängen ergibt sich eine Zwangsführung für die Heckscheibe, was dazu führt, dass die Heckscheibe bei der Ablegebewegung des Verdecks zwischen dem Verdeckstoff abgelegt wird und dabei nicht abgeknickt werden muss, wohingegen im geschlossenen Zustand des Verdecks die Heckscheibe gegen den Verdeckstoff gepresst wird und somit für einen dichtenden Abschluss des Verdecks sorgt. Durch die Zwangsführung der Heckscheibe ist vorteilhafterweise eine sehr einfache Steuerung der Ablegebewegung des Verdecks samt der Heckscheibe gegeben, wobei sämtliche zur Bewegung zwischen der geschlossenen und der abgelegten Stellung des Verdecks notwendigen Vorgänge über die Gesamtkinematik derselben sichergestellt wird.

Vorteilhafterweise ist hierdurch die Verwendung einer aus einem starren bzw. festen Material bestehenden Heckscheibe möglich. Dadurch, dass die Heckscheibe nur über einen Teil ihrer Höhe mit dem Verdeckstoff verbunden ist, ergibt sich eine erhebliche Vereinfachung der Ablegebewegung, da auf diese Weise eine Relativbewegung der Heckscheibe gegenüber dem Verdeckstoff möglich ist.

Eine Öffnungsfunktion des Verdecks, die unabhängig von der Ablegebewegung desselben möglich ist, ergibt sich, wenn der Verdeckstoff in seinem unteren Bereich an einem Spannbügel angebracht ist, welcher gegenüber der Karosserie drehbar gelagert ist. Auf diese Weise ist es möglich, Zugang zum Innenraum des Kraftfahrzeugs zu erlangen, ohne dass das Verdeck geöffnet werden muss. Dies wird durch die erfindungsgemäßen Lenker, die die Heckscheibe mit den jeweiligen Hebelgestängen verbinden, unterstützt, da sich bei der Öffnungsbewegung des Spannbügels die Heckscheibe in den Innenraum des Kraftfahrzeugs bewegen kann.

In diesem Zusammenhang wird die Ablegebewegung der Heckscheibe unterstützt, wenn dieselbe in einer weiteren vorteilhaften Ausgestaltung der Erfindung mittels wenigstens eines Scharniers an dem Spannbügel angebracht ist.

Ein Kraftfahrzeug mit einem erfindungsgemäßen Verdeck ist Anspruch 10 zu entnehmen.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Dabei zeigen:
- Fig. 1: Ein Kraftfahrzeug mit dem erfindungsgemäßen Verdeck in einer Geschlossenstellung;
- Fig. 2: das Verdeck aus Fig. 1 in einer Zwischenstellung;
- Fig. 3: das Verdeck aus Fig. 1 in einer abgelegten Stellung; und
- Fig. 4: das Verdeck aus Fig. 1 ein einer Stellung mit geöffnetem Spannbügel.

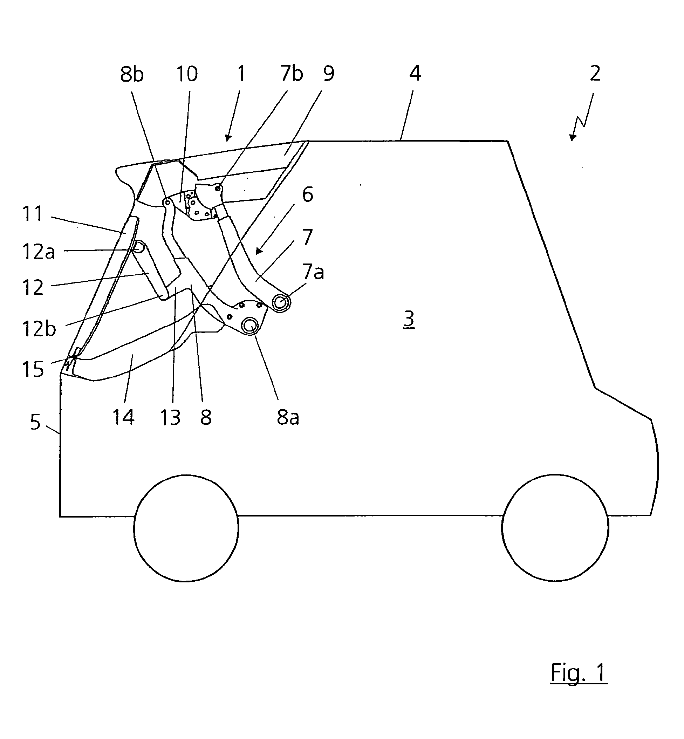

Fig. 1 zeigt ein Verdeck 1 für ein äußerst schematisch dargestelltes Kraftfahrzeug 2, welches eine Karosserie 3 aufweist. Das Verdeck 1 befindet sich in einem Heckbereich des Kraftfahrzeugs 2 und erstreckt sich von einem vorzugsweise wie in der DE 197 31 330 C2 beschriebenen Art und Weise ausgeführten, mit einem nicht näher bezeichneten, verschieblichen Schiebefaltbezug versehenen Dach 4 zu einem Kofferraumdeckel 5. Eine solche Form des Verdecks 1 wird auch als Heckverdeck bezeichnet.

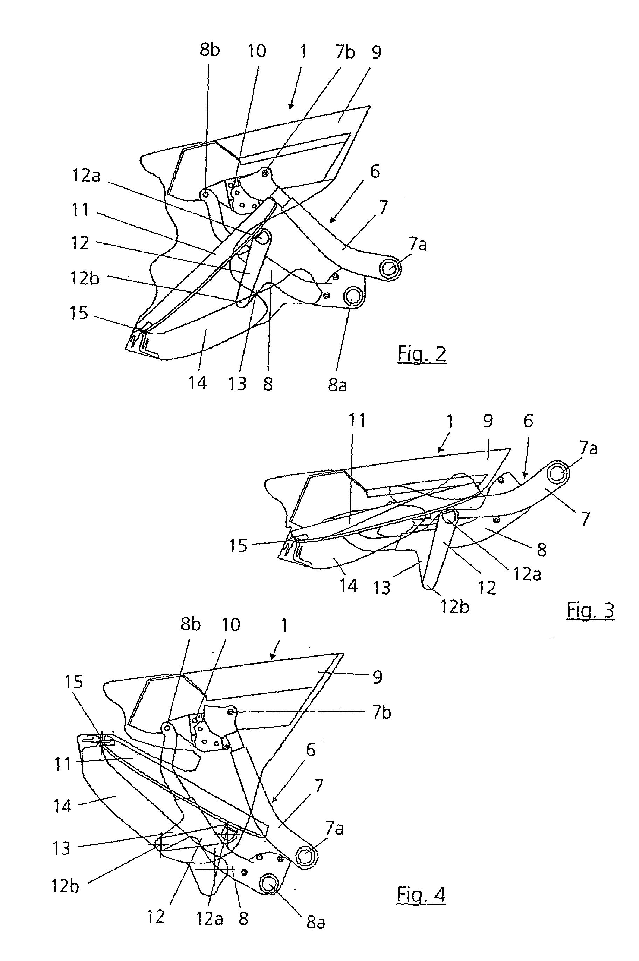

Das Verdeck 1 ist zwischen einer in Fig. 1 dargestellten, geschlossenen Stellung und einer in Fig. 3 dargestellten, geöffneten bzw. abgelegten Stellung bewegbar. Zur Realisierung dieser Schließ- bzw. Ablegebewegung dienen beiderseits des Verdecks 7 vorgesehene Hebelgestänge 6, von denen in den Figuren jedoch jeweils nur das rechte Hebelgestänge 6 dargestellt ist. Das Hebelgestänge 6 weist einen vorderen Hauptlenker 7 und einen hinteren Hauptlenker 8 auf, die an jeweils einem ihrer Enden über jeweilige Drehpunkte 7a bzw. 8a mit der Karosserie 3 des Kraftfahrzeugs 2 drehbar verbunden sind. An dem jeweils gegenüberliegenden Ende ist an den beiden Hauptlenkern 7 und 8 ein Verdeckstoff 9 angebracht, der für den dichten Abschluss des Kraftfahrzeugs 2 sorgt und den Hauptbestandteil des Verdecks 1 bildet. Die Verbindung der beiden Hauptlenker 7 und 8 mit dem Verdeckstoff 9 erfolgt im vorliegenden Fall über einen Querlenker 10. Mit dem Querlenker 10 weisen die beiden Hauptlenker 7 und 8 jeweilige Drehpunkte 7b und 8b auf, so dass die beiden Hauptlenker 7 und 8 sowie der Querlenker 10 ein Viergelenk bilden.

An dem Verdeckstoff 9 ist im hinteren Bereich desselben eine Heckscheibe 11 angebracht, welche über einen Lenker 12 mit dem Hebelgestänge 6 verbunden ist. Selbstverständlich sind auf beiden Seiten des Verdecks 1 jeweilige mit der Heckscheibe 11 und dem Hebelgestänge 6 verbundene Lenker 12 vorgesehen, jedoch ist auch hier nur der Lenker 12 auf der rechten Seite des Verdecks 1 dargestellt. Der Lenker 12 ist an einem Ende über einen ersten Drehpunkt 12a mit der Heckscheibe 11 und an dem dem ersten Drehpunkt 12a gegenüberliegenden Ende über einen zweiten Drehpunkt 12b mit dem hinteren Hauptlenker 8 verbunden. Der hintere Hauptlenker 8 weist hierzu einen Vorsprung 13 auf, der sich in Richtung der Heckscheibe 11 von dem hinteren Hauptlenker 8 weg erstreckt und den Drehpunkt 12b mit dem Lenker 12 bildet.

Mit der beschriebenen Kinematik des Verdecks 1 ist es möglich, mittels eines nicht dargestellten Antriebs oder manuell das Verdeck 1 in die in Fig. 3 dargestellte abgelegte Stellung zu bringen. Hierzu wird zunächst die Zwischenstellung gemäß Fig. 2 eingenommen, wobei deutlich wird, dass die Heckscheibe 11 nur über einen Teil ihrer Höhe mit dem Verdeckstoff 9 verbunden ist und sich so relativ zu demselben bewegen kann. Im vorliegenden Fall ist die Heckscheibe 11 im unteren Bereich des Verdeckstoffs 9 fest mit demselben verbunden und im oberen Bereich von demselben gelöst, wobei die beiden Bereiche ungefähr gleich lang sein können. In dem genannten unteren Bereich des Verdeckstoffs 9 ist an demselben ein im wesentlichen U-förmiger Spannbügel 14 angebracht, dessen Funktion später ausführlicher beschrieben wird. Die Anbringung des Verdeckstoffs 9 an dem Spannbügel 14 erfolgt über wenigstens ein Scharnier 15.

Bei der dargestellten Ablegebewegung des Verdecks 1 bewegt sich also die Heckscheibe 11 entgegen der Bewegungsrichtung des Verdeckstoffs 9 nach innen und kommt somit in der abgelegten Position des Verdecks 1 gemäß Fig. 3 zwischen dem Verdeckstoff 9 zu liegen. Hierbei sorgt der Lenker 12 für eine Zwangsführung der Heckscheibe 11 durch das Hebelgestänge 6, da er über die beiden Drehpunkte 12a und 12b sowohl mit der Heckscheibe 11 als auch mit dem Hebelgestänge verbunden ist. Bei der Schließbewegung des Verdecks 1 sorgt der Lenker 12 hingegen dafür, dass die Heckscheibe 11 gegen den Verdeckstoff 9 gepresst wird.

Die Heckscheibe 11 kann durch die beschriebene Zwangsführung durch die beiden Hebelgestänge 6 und die dadurch ermöglichte, oben beschriebene Ablegebewegung aus einem festen bzw. starren Material, vorzugsweise aus Glas, bestehen. Des weiteren wird die Heckscheibe 11 vorzugsweise von einem Rahmen umgeben, der jedoch nicht dargestellt ist und der gegenüber dem Verdeckstoff 9 beispielsweise mittels einer ebenfalls nicht dargestellten, um die Heckscheibe 11 umlaufenden Dichtung abgedichtet ist.

In Fig. 4 ist die Möglichkeit der Öffnung des Verdecks 1 mittels des Spannbügels 14 dargestellt. Dieser ist gegenüber der Karosserie 3 drehbar, so dass er in die in Fig. 4 dargestellte obere Position gebracht werden kann, in der ein Zugang zu dem Innenraum des Kraftfahrzeugs 2 möglich ist. Dabei wird aufgrund der oben beschriebenen Zwangsführung der Heckscheibe 11 gegenüber dem Hebelgestänge 6 mittels der Lenker 12 die Heckscheibe 11 von dem Verdeckstoff 9 gelöst und bewegt sich in den Innenraum des Kraftfahrzeugs 2. Das wenigstens eine Scharnier 15, mit dem die Heckscheibe 11 an dem Spannbügel 14 angebracht ist, ermöglicht auch in diesem Fall die Verschwenkbewegung der Heckscheibe 11.

## Patentansprüche

1. Verdeck für ein Kraftfahrzeug, welches zwischen einer geschlossenen und einer abgelegten Stellung bewegbar ist, mit einem Verdeckstoff, der auf zwei einander gegenüberliegenden Seiten an einem jeweiligen Hebelgestänge angebracht ist, welches jeweils zwei Hauptlenker aufweist, die jeweils an einem Ende karosseriefest und an dem gegenüberliegenden Ende mit dem Verdeckstoff verbunden sind, und mit einer an dem Verdeckstoff angebrachten Heckscheibe,
**dadurch gekennzeichnet,**
**dass** die Heckscheibe (11) über jeweilige Lenker (12) mit dem Hebelgestänge (6) verbunden ist, wobei die Lenker (12) jeweils an einem ihrer Enden über einen ersten Drehpunkt (12a) mit der Heckscheibe (11) und an dem gegenüberliegenden Ende über einen zweiten Drehpunkt (12b) mit einem der beiden Hauptlenker (8) verbunden sind, wobei die Heckscheibe (11) nur über einen Teil ihrer Höhe mit dem Verdeckstoff (9) verbunden ist.

2. Verdeck nach Anspruch 1,
**dadurch gekennzeichnet,**
**dass** der Verdeckstoff (9) in seinem unteren Bereich an einem Spannbügel (14) angebracht ist, welcher gegenüber der Karosserie (3) drehbar gelagert ist.

3. Verdeck nach Anspruch 2,
**dadurch gekennzeichnet,**
**dass** die Heckscheibe (11) mittels wenigstens eines Scharniers (15) an dem Spannbügel (14) angebracht ist.

4. Verdeck nach Anspruch 2 oder 3,
**dadurch gekennzeichnet,**
**dass** die Heckscheibe (11) an derjenigen Seite, an der sie an dem Spannbügel (14) angebracht ist, mit dem Verdeckstoff (9) verbunden ist.

5. Verdeck nach einem der Ansprüche 1 bis 4,
**dadurch gekennzeichnet,**
**dass** die Heckscheibe (11) aus einem starren Material besteht.

6. Verdeck nach Anspruch 5,
**dadurch gekennzeichnet,**
**dass** die Heckscheibe (11) aus Glas besteht.

7. Verdeck nach einem der Ansprüche 1 bis 6,
**dadurch gekennzeichnet,**
**dass** die Heckscheibe (11) von einem Rahmen umgeben ist.

8. Verdeck nach Anspruch 7,
**dadurch gekennzeichnet,**
**dass** der Rahmen gegenüber dem Verdeckstoff (9) abgedichtet ist.

9. Kraftfahrzeug mit einem Verdeck nach einem der Ansprüche 1 bis 8.
